# EUROPÄISCHE PATENTSCHRIFT

(11) **EP 0 473 539 B1**
(45) Veröffentlichungstag und Bekanntmachung des Hinweises auf die Patenterteilung: **26.10.1994**
(21) Anmeldenummer: 91810600.6
(22) Anmeldetag: 26.07.1991
(51) Int. Cl.: E02B 9/06, E21D 11/10, E04C 5/08

(54) **Anordnung von Spannkabeln in einem Druckstollen**
Arrangement of tension cables in a pressure gallery
Disposition de câbles de tension dans une galerie en pression

(30) Priorität: 24.08.1990 CH 2751/90
(43) Veröffentlichungstag der Anmeldung: 04.03.1992
(73) Patentinhaber: VSL International AG, CH-3008 Bern (CH)
(72) Erfinder: Siegfried, Erwin, CH-3097 Liebefeld (CH); Marti, Peter, CH-8476 Unterstammheim (CH)
(74) Vertreter: Tschudi, Lorenz

(56) Entgegenhaltungen:
- AT-A- 336 072
- CH-A- 615 728
- CH-A- 674 546
- DE-A- 1 918 378
- DE-A- 3 734 953
- US-A- 4 112 694

## Beschreibung

Die vorliegende Erfindung bezieht sich auf die Anordnung von Spannkabeln in einem Druckstollen gemäss dem Oberbegriff des Patentanspruches 1.

Bei der Erstellung beispielsweise eines im Gebirge eingebetteten Druckstollens mit einer vorgespannten Betonauskleidung werden vor dem Betonieren eines Druckstollenabschnittes längs dem Umfang des Druckstollens verlaufende Spannkabel verlegt. Diese Spannkabel werden üblicherweise in Längsrichtung des Druckstollens nebeneinanderliegend angeordnet. Je nach den verschiedenen Belastungseinflüssen, wie beispielsweise dem vorgesehenen Wasserdruck im Druckstollen sowie der Gebirgsbeschaffenheit und der Gebirgsüberlagerung werden unterschiedliche Mengen an Spannkabeln benötigt.

In einer ersten bekannten Ausbildungsart können solche Spannkabel aus einem Bündel hochfester siebendrähtiger Spannstahllitzen bestehen, welche in einem nachträglich mit fliessbarem Zementmörtel injizierten Hüllrohr verlaufen. Diese Ausbildungsart erweist sich beim Druckstollenbau sowohl für den Einbau als auch für das Ausinjizieren als aufwendig. Insbesondere ist bei einem im wesentlichen in horizontaler Richtung verlaufenden Druckstollen, die Entlüftung für die Injektion ungünstig, da diese zuoberst im Druckstollen erfolgen muss. Im weiteren ist zu beachten, dass der Hüllrohrdurchmesser entsprechend gross zu wählen ist, damit der Zementmörtel auf der ganzen Länge die Spannstahllitzen im Hüllrohr umschliessen kann. Bei Druckstollen mit hohem Wasserdruck können durch die gross gewählten Hüllrohrdurchmesser nicht genügend Spannkabel eingebaut werden, da insbesondere auch darauf geachtet werden muss, dass zwischen den nebeneinanderliegend angeordneten Hüllrohren eine genügend grosse Distanz für das Einbringen des Betons bei der Erstellung der Betonauskleidung aufrechterhalten bleibt. Eine gattungsgleiche Ausführung die den Obergrift des Anspruchs 1 entspricht ist in der AT-PS 336 072 offenbart. Darin sind die Hüllrohre mit den eingefädelten Spanngliedern gegen die Tunnel- oder Stollenwandung lediglich abgestützt. Ein nachträglicher Verbund der Spannglieder, d.h. Ausinjizieren der Hüllrohre mit einer aushärtenden Mörtelmasse ist vorgesehen.

Eine zweite zum Stand der Technik zählende Ausbildungsart sieht vor, Spannkabel, die aus einem Bündel sogenannter Monolitzen aufgebaut sind, zu verwenden. Jede dieser Monolitzen umfasst eine siebendrähtige Spannstahllitze, welche mit Dauerkorrosionsschutzfett umgeben und mit einem Kunststoffmantel umhüllt ist. Die Zusammenfassung mehrerer solcher Monolitzen zu einem Bündel erfolgt beispielsweise durch die Umwicklung mit Klebeband in mehr oder weniger gleichmässigen Abständen. Die Spannkabel der zweiten Ausbildungsart werden ohne Hüllrohr direkt verlegt und sind nach dem Erstellen der Betonauskleidung von Beton umgeben. Sie benötigen weniger Platz als Spannkabel gemäss der erstgenannten Ausbildungsart. In einer vorgegebenen Querschnittsfläche können somit mehr Spannkabel durchgeführt werden.

Ein weiterer Vorteil der Verwendung von Spannkabeln, die mit Monolitzen aufgebaut sind, besteht darin, dass diese weniger Reibungsverluste aufweisen als nackte Spannstahllitzen, welche in einem Hüllrohr geführt sind. Dadurch kann mehr Vorspannkraft in den Druckstollen eingeleitet werden.

Da die zu einem Bündel zusammengefassten Monolitzen dieser zweiten Ausbildungsart auch nach dem Einbetonieren aneinander anliegen, kann nicht ausgeschlossen werden, dass beim Spannen dieser Kabel die Kunststoffumhüllungen der einzelnen Monolitzen aneinander reiben. Dadurch können Verletzungen der Isolation und später Korrosionsschäden an den Spannstahllitzen entstehen.

Bei beiden vorgenannten Ausbildungsarten der Spannkabel werden die Litzenbündel eines Kabels gemeinsam mit einer Spannpresse vorgespannt. Die dazu benötigten Spannpressen sind entsprechend schwer in der Ausführung und insbesondere innerhalb des Druckstollens unhandlich zu bedienen. Im weiteren ist zu beachten, dass durch die Spreizung des Litzenbündels beim Spannanker, welcher üblicherweise in einer dazu vorgesehenen Nische angeordnet ist, weiterhin wertvoller Platz für das Verlegen von Spannkabeln verloren geht. Um die Vorspannkraft in jedem Querschnitt des Druckstollens konstant zu halten, hat man deshalb vorgesehen, die genannten Nischen um den Umfang des Druckstollens versetzt anzuordnen. Die vorgenannten gewichtigen und voluminösen Spannpressen müssen deshalb unter Umständen am ganzen Umfang des Druckstollens angesetzt werden.

Obschon es bekannt ist, anstelle des Litzenbündels eine Spannstahllitze nach der anderen mit einer kleineren Spannpresse einzeln vorzuspannen, kann ein solches Vorgehen bei den vorgenannten Spannkabelarten nicht angewendet werden, da die Verletzungsgefahr von aneinander anliegenden Spannstahllitzen oder Monolitzen durch das Aneinanderscheuern beim Spannen unzulässig hoch ist.

Im französischen Dokument FR-A-2 638 771 ist eine Anordnung eines Spannkabels gezeigt, das ein Bündel von sechs Monolitzen umfasst, welche durch längs des Kabels in im wesentlichen regelmässigen Abständen angeordneten Distanzhaltern voneinander distanziert sind. Das Spannkabel wird vor dem Betonieren eines Bauwerkteiles lose im Bauwerkteil verlegt. Sechs Monolitzen sind im wesentlichen konzentrisch zu einer Spannkabellängsachse angeordnet. Die Zwischenräume zwischen den einzelnen Monolitzen sind relativ klein im Vergleich zu dem von den Monolitzen eingeschlossenen Raum.

Beim Betonieren besteht die Gefahr, dass dieser relativ grosse Hohlraum innerhalb der Monolitzen nicht vollständig mit Beton ausgefüllt wird. Diese Gefahr ist umso grösser, je mehr Monolitzen zu einem Spannkabelbündel zusammengefasst sind und je kleiner die Zwischenräume zwischen den einzelnen zueinander beabstandeten Monolitzen sind.

Werden mehrere solcher Spannkabelanordnungen irgendwie unmittelbar neben und/oder übereinander verlegt, so wird die Gefahr, dass der Beton nicht in alle Hohlräume einfliessen kann, weiter vergrössert. Beim Spannen der einzelnen Monolitzen können verbleibende Hohlräume Knickstellen oder Schwachstellen bewirken, bei denen auf die Ummantelung der entsprechenden Monolitze ein hoher Druck ausgeübt wird, welcher genügen kann, dass die Monolitze verletzt oder zerstört wird.

Es ist die Aufgabe der vorliegenden Erfindung, eine Anordnung von Spannkabeln in einem Druckstollen zu offenbaren, mit welcher die vorgenannten Nachteile beseitigt werden können. Insbesondere soll mit der Anordnung ein gegenseitiges Verletzen einzelner Monolitzen eines Spannkabels beim Spannen verhindert werden, soll gewährleistet sein, dass jede Monolitze vollständig von Beton umgeben ist, und soll im weiteren erreicht werden, dass auf einem möglichst kleinen zur Verfügung stehenden Querschnitt möglichst viele Monolitzen anordbar sind.

Diese Aufgabe wird mit einer Anordnung von Spannkabeln gemäss den Merkmalen des kennzeichnenden Teiles des Patentanspruches 1 gelöst.

Ein einzelnes Spannkabel gemäss der vorliegenden Erfindung umfasst ein Bündel von Monolitzen, wobei jede dieser Monolitzen auf ihrer ganzen Länge zu ihren benachbarten Monolitzen beabstandet ist. Die Beabstandung wird vorteilhafterweise dadurch erreicht, dass längs des Spannkabels in mehr oder weniger gleichmässigen Abständen Abstandhalter zwischen die einzelnen Monolitzen eingelegt oder eingeführt werden. Ein zum Verlegen längs des Umfanges des Druckstollens vorgesehenes Spannkabel wird vorgängig entsprechend mit den einzelnen Monolitzen und den genannten Abstandhaltern vorbereitet. Ueber den Umfang des Druckstollens verteilt sind im wesentlichen gegen das Zentrum des Stollens gerichtete Spannkabelträger angeordnet, an welchen ein vorbereitetes Spannkabel nach dem anderen befestigbar ist. An jedem der Spannkabelträger können mehrere, aus mehr oder weniger Monolitzen bestehende Spannkabel befestigt werden. Jedes der Spannkabel ist dabei von seinen benachbarten Spannkabeln beabstandet. Wesentlich ist, dass die Spannkabelträger so ausgebildet sind, dass die einzelnen Spannkabel paarweise nebeneinander angeordnet werden können. Die Spannkabelträger können so ausgestaltet sein, dass weitere Spannkabel übereinanderliegend angeordnet werden können. Die gegenseitige Beabstandung der einzelnen Monolitzen sowie deren Anordnung zu einem Spannkabel ist dabei so gewählt, dass jede der Monolitzen beim Betonieren eines Druckstollenabschnittes mit möglichst grosser Sicherheit von Beton umflossen wird.

Die Abstände der einzelnen Spannkabel untereinander sind grösser gewählt als die Abstände der einzelnen Monolitzen der Spannkabel. Dies begünstigt das Einbringen und Durchdringen des Betons zwischen die einzelnen Spannkabel. Vorteilhafterweise werden die Zuschlagstoffe so gewählt, dass der maximale Korndurchmesser etwas kleiner ist als die lichte Weite zwischen den einzelnen Spannkabeln. Obschon die grössten Körner in diesem Fall nicht zwischen die einzelnen Monolitzen eindringen können, kann deren vollständiges Eingebettetsein in den eingebrachten Beton durch den prozentual überwiegenden Kleinkornanteil der Zuschlagstoffe gewährleistet werden.

Indem jede der einzelnen Monolitzen vollständig vom Beton umgeben und distanziert von den benachbarten Monolitzen in der erstellten Betonauskleidung angeordnet ist, kann jede dieser Monolitzen mit einer relativ kleinen Einzelpresse vorgespannt werden, ohne dass die Gefahr einer eigenen Verletzung oder der Verletzung von benachbarten Monolitzen besteht. Das vollständige Eingebettetsein jeder der Monolitzen im Beton verhindert auch das Auftreten einzelner ausgeprägter Umlenkstellen bei den Spannkabelträgern. Die beim Spannen ins Stolleninnere gerichteten Kräfte jeder der Spannstahllitzen sind dadurch nahezu gleichmässig über die ganze Länge der Litze verteilt.

Um sicherzugehen, dass jede der Monolitzen ganz von Beton umgeben ist, hat sich gezeigt, dass jedes der Spannkabel höchstens fünf Monolitzen umfassen sollte. Vorzugsweise werden diese durch eine zentrale Monolitze und vier diese umgebende Monolitzen angeordnet.

Anhand von Figuren wird die Erfindung nachstehend beispielsweise näher erläutert. Es zeigen
- Fig. 1: einen Querschnitt durch einen Druckstollen,
- Fig. 2: einen Schnitt durch die Druckstollenwandung gemäss der Linie II-II in der Fig. 1, und
- Fig. 3: eine detaillierte Darstellung eines Spannkabelträgers mit daran angeordneten Spannkabeln.

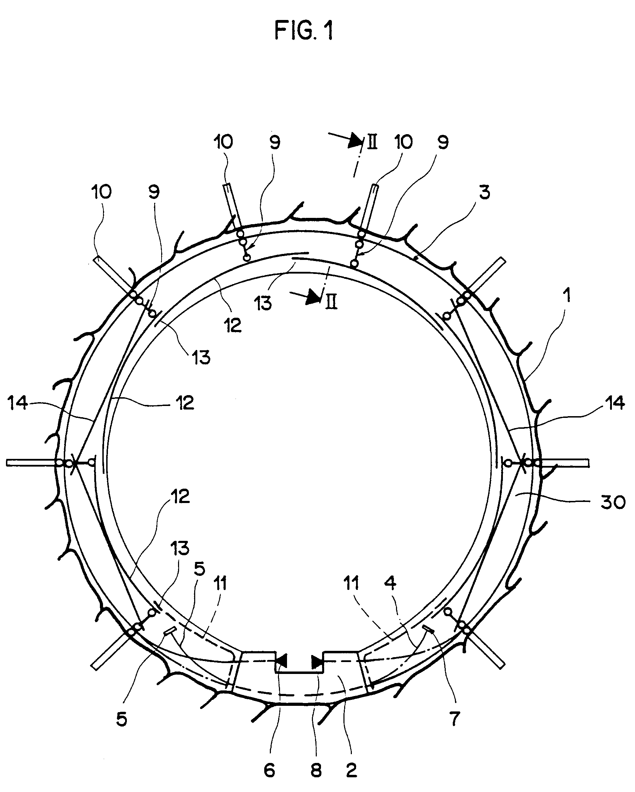

In der Fig. 1 ist mit dem Bezugszeichen 1 die beispielsweise felsige Wandung eines ausgefrästen oder ausgebohrten Druckstollens bezeichnet. Das Bezugszeichen 2 kennzeichnet ein Sohlenelement, das während dem Bau des Druckstollens erstellt und dazu verwendet wird, um in nicht dargestellter Weise längs dem Sohlenelement Maschinen und Material zu transportieren. Neuerdings ist vorgesehen, an ins Stolleninnere ragenden Schenkeln des Sohlenelementes Spannverankerungen 6, 8 von Spannkabeln 3, 4 anzuordnen. Die den genannten Kabeln je zugeordnete feste Verankerung ist in der Fig. mit dem Bezugszeichen 5, 7 bezeichnet. Jedes der Spannkabel 3, 4, von denen in Längsrichtung des Druckstollens eine Vielzahl vorhanden sind, verläuft längs des Umfanges des Druckstollens. Um eine möglichst grosse Wirkung einer späteren Vorspannung zu erzielen, verlaufen die Spannkabel 3, 4 vorzugsweise möglichst nahe der Wandung 1. Die Spannkabel 3, 4 sind an Befestigungseinrichtungen, sog. Spannkabelträgern 9 befestigt. Jeder dieser Spannkabelträger ist im wesentlichen zum Zentrum des Druckstollens gerichtet. Da an jedem der Spannkabelträger 9 mehrere Spannkabel 3, 4 entweder nebeneinander und/oder auch übereinanderliegend befestigbar sind, wobei jedes der Spannkabel zum benachbarten Spannkabel erfindungsgemäss beabstandet sein muss, ist die Anzahl der über den Umfang des Druckstollens verteilten Kabelträger so zu wählen, dass die vorgenannte Forderung leicht erfüllbar ist. Als zweckmässig haben sich Abstände zwischen den einzelnen Spannkabelträgern 9 in der Umfangsrichtung des Druckstollens in der Grössenordnung von 2 m erwiesen. Dieser Abstand ist selbstverständlich auch vom Durchmesser des Druckstollens und der Steifigkeit der Spannkabel abhängig.

Die Spannkabelträger 9 sind, wie weiter hinten sichtbar sein wird, an Felsdübeln 10 befestigt. Zumindest eine Anzahl der Spannkabelträger 9 erstreckt sich im wesentlichen über die ganze Dicke einer später vorgesehenen Betonauskleidung 30. An dem der Wandung 1 abgewandten Ende dieser Spannkabelträger 9 sind Befestigungsorgane zum Befestigen von Bewehrungsnetzen 12 vorgesehen. Vorzugsweise wird der Bewehrungsstoss 13 zwischen zwei benachbarten Bewehrungsnetzen 12 im Bereich eines Spannkabelträgers 9 angeordnet. Mit 11 sind die Anschlussbewehrungen gekennzeichnet, die im wesentlichen das Sohlenelement 2 mit den Bewehrungsnetzen 12 verbinden.

Mit 14 sind Befestigungsstäbe gekennzeichnet, welche an zwei in Umfangsrichtung des Druckstollens benachbarten Spannkabelträger befestigt sind und an welchen beispielsweise das entsprechende Armierungsnetz 12 zusätzlich befestigbar ist.

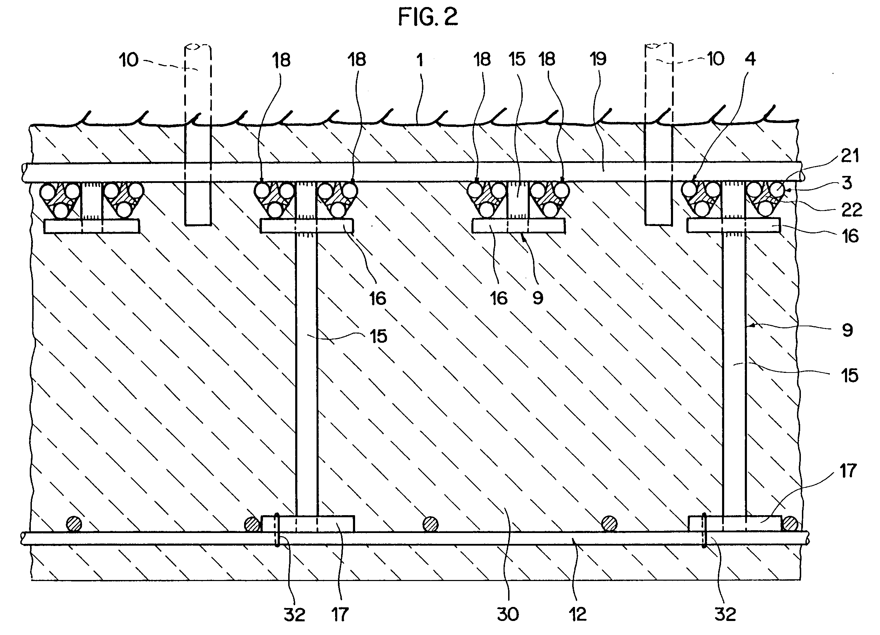

In der Fig. 2 ist ein Längsschnitt durch eine Druckstollenwandung gemäss der Linie II-II in der Fig. 1 dargestellt. An den Felsdübeln 10, die in regelmässigen Abständen längs und in Umfangsrichtung des Druckstollens im Fels verankert sind, ist an den ins Stolleninnere ragenden Enden ein Längsträger 19 befestigt. Längs des letzteren sind in regelmässigen Abständen Spannkabelträger 9 angeordnet. Jeder der Spannkabelträger 9 weist einen im wesentlichen zum Zentrum des Druckstollens gerichteten Steg 15 auf, sowie mindestens eine etwa rechtwinklig zum Steg und im wesentlichen parallel zum Längsträger 19 verlaufende Sprosse 16. Diese ist dazu vorgesehen, um auf der dem Zentrum des Stollens abgewandten Seite eingelegte Spannkabel 3, 4, 18 zu tragen. Im gezeigten Ausführungsbeispiel besteht jedes der gezeigten Spannkabel aus drei Monolitzen 21, die mittels eines Abstandhalters 22 gegenseitig voneinander beabstandet sind. Je nach dem Durchmesser des Druckstollens sind solche Abstandshalter 22, die länglich sind und im Querschnitt die Form eines dreischenkligen Sternes aufweisen, in mehr oder weniger regelmässigen Abständen ca. alle 1 bis 1,5 m längs des entsprechenden Spannkabels angeordnet. Die an die Abstandhalter 22 anliegenden Monolitzen können beispielsweise mittels einer längs des Spannkabels periodisch angebrachten Bandumwicklung zusammengehalten werden.

In dem in der Fig. 2 gezeigten Ausführungsbeispiel besitzt in Längsrichtung des Druckstollens jeder zweite Spannkabelträger 9 einen verlängerten Steg 15, der sich im wesentlichen über die Dicke der vorgesehenen Betonauskleidung 30 erstreckt. An dem dem Zentrum des Druckstollens zugewandten Ende dieser verlängerten Stege ist je ein Befestigungsorgan 17 angebracht, das je der Befestigung des entsprechenden Maschennetzes 12 dient. Zur Befestigung werden dazu nach bekannter Art Drahtbinder 32 verwendet.

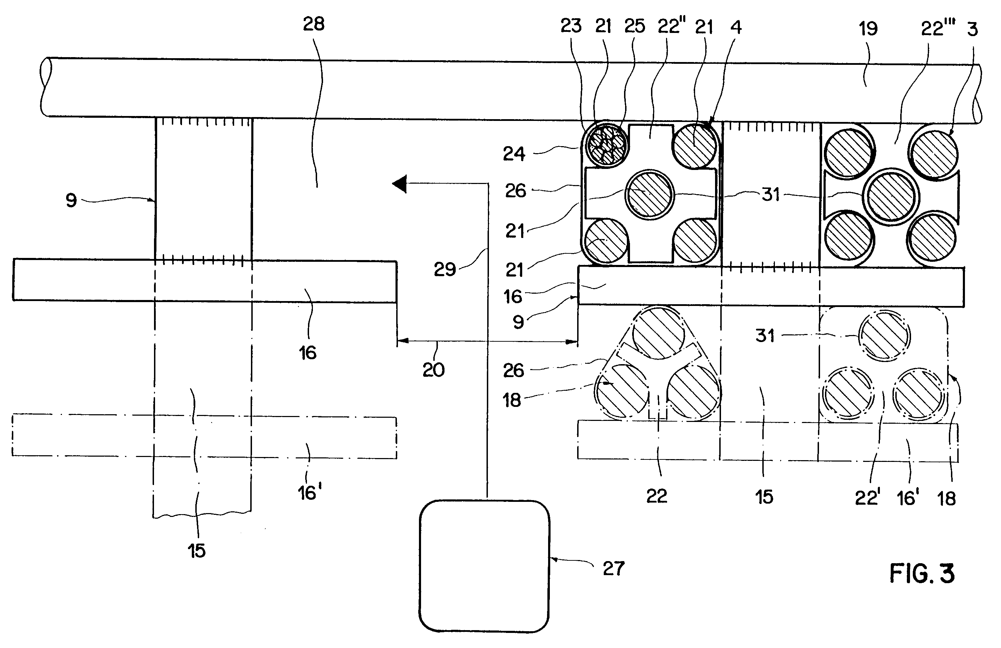

In der Fig. 3 ist die Anordnung der Spannkabel 3, 4, 18 an einem Spannkabelträger 9 im Detail dargestellt. Am Steg 15 des Spannkabelträgers 9, welcher am Längsträger 19 befestigt ist, ist neben der genannten Sprosse 16 eine weitere Sprosse 16' befestigt. Diese verläuft, beabstandet zur Sprosse 16, im wesentlichen parallel zur letzteren. Ein erstes und zweites Spannkabel 3, 4, die alle beide beispielsweise je fünf Monolitzen 21 umfassen, sind über der inbezug auf das Zentrum des Druckstollens äusseren Sprosse 16 angeordnet. Dabei befindet sich das erste Spannkabel 3 auf der einen Seite des Steges 15 und das zweite Spannkabel 4 auf der anderen Seite. Eine gegenseitige Beabstandung der beiden genannten, nebeneinander benachbarten Spannkabel 3, 4 ist durch die Breite des Steges 15 gegeben. Das zweite Spannkabel 4 umfasst kreuzförmige Abstandhalter 22', die in ihrer Mitte eine Durchführungsöffnung 31 aufweisen. Die Abstandhalter 22' sind auf eine zentral angeordnete Monolitze 21 aufgeschoben und voneinander distanziert worden. Immer zwischen zwei Schenkeln der kreuzförmigen Abstandhalter ist je eine äussere Monolitze 21 angeordnet. Zusammengehalten wird das Bündel mittels einem Band 26, mit dem das erstere in mehr oder weniger regelmässigen Abständen umwickelt ist. Den bekannten Aufbau einer einzelnen Monolitze, wie er vorgängig bereits beschrieben worden ist, ist ebenfalls dargestellt. Mit 23 ist ein einzelner Stahldraht der Litze, mit 24 die Kunststoffummantelung und mit 25 das Korrosionsschutzfett bezeichnet.

Mit einem Abstandhalter 22''', der auf alle fünf Monolitzen des ersten Spannkabels 3 aufschiebbar ist, ist eine Ausführungsvariante gezeigt, bei der das Anbringen eines Bandes zum Zusammenhalten des Bündels nicht notwendig ist. Der Abstandhalter 22''' ist ebenfalls ein länglicher Körper, vorzugsweise aus Kunststoff gefertigt, mit einem malteserkreuzähnlichen Querschnitt.

Auf der inneren Sprosse 16' sind zwei weitere Spannkabel 18 angeordnet. Das eine, unter bzw. innerhalb des zweiten Spannkabels 4 verlaufende Spannkabel 18 ist, wie bereits in der Fig. 2 gezeigt, aufgebaut. Als Variante dazu wäre ebenfalls denkbar, Abstandshalter 22' mit drei Durchführungsöffnungen 31 zu versehen, und diese auf drei Monolitzen aufzuschieben, wie dies in der Fig. 3 beim Spannkabel 18, das unter- oder innerhalb des ersten Spannkabels 3 angeordnet ist, gezeigt ist. Die radiale Beabstandung zwischen den einzelnen Spannkabeln wird durch die Dicke der Sprosse 16 bestimmt. Je zwei in Längsrichtung benachbarte Spannkabelträger 9 müssen mindestens soweit voneinander entfernt angeordnet sein, dass ein weiteres zu verlegendes Spannkabel, das mit dem Kennzeichen 27 angedeutet ist, durch den mit 20 gekennzeichneten Zwischenraum entlang dem Pfeil 29 auf einen noch freien Spannkabelplatz 28 eingefahren werden kann. Ein einzelnes Spannkabel, wie es hier dargestellt ist, beansprucht ungefähr eine Fläche von 50 x 50 mm².

Durch die erfindungsgemässe Spannkabelanordnung, bei der die Abstände zwischen benachbarten Spannkabel durch die Wahl der Spannkabelträger zwangsläufig grösser gehalten sind als die Abstände zwischen benachbarten Monolitzen einzelner Spannkabel, wird gewährleistet, dass jede der Monolitzen nach dem Betonieren des Druckstollens vollständig von Beton umgeben ist. Die dadurch erzielte vollumfängliche Kabelführung gewährleistet einen sicheren Korrosionsschutz. Die erfindungsgemäss angeordneten Monolitzen können ohne Verletzungsgefahr mit einer relativ kleinen Spannpresse einzeln vorgespannt werden. Das Risiko, benachbart angeordnete Monolitzen dabei zu veletzen, existiert nicht.

Die erfindungsgemässe Spannkabelanordnung lässt sich nicht nur im Druckstollenbau, sondern auch bei anderen Betonkonstruktionen verwenden, wo beispielsweise platzmässig die Monolitzen einzeln vorgespannt werden müssen, und wo ein vollumfänglicher Korrosionsschutz gewährleistet werden soll. Eine Vielzahl weiterer Varianten von Abstandhaltern ist ebenfalls denkbar.

## Patentansprüche

1. Anordnung von Spannkabeln (3, 4, 18) in einem mit einer vorgespannten Betonauskleidung zu versehenen Druckstollen, mit nebeneinanderliegenden, längs des Umfanges des Druckstollens (1) verlegten Spannkabeln, dadurch gekennzeichnet, dass jedes der Spannkabel ein Bündel von Monolitzen umfasst, welches Bündel in etwa regelmässigen Abständen zusammengehalten und an längs dem Spannkabel angeordneten, in der Wandung des ausgefrästen oder ausgebrochenen Druckstollens verankerten Befestigungseinrichtungen (9) befestigt ist, dass längs eines jeden höchstens fünf Monolitzen umfassenden der Spannkabel Mittel (22, 22', 22'', 22''') vorhanden sind, um jede der Monolitzen des entsprechenden Bündels zu ihren benachbarten Monolitzen beabstandet zu halten, dass die Befestigungseinrichtungen im wesentlichen zur Längsachse des Druckstollens gerichtete Spannkabelträger (9) sind, die längs des Umfanges und längs der Längsachse des Druckstollens angeordnet sind, wobei mehrere der in der Richtung der Längsachse des Druckstollens paarweise nebeneinanderliegende und ggf. in radialer Richtung des Druckstollens übereinanderliegende Spannkabel an jedem der mindestens einen Spannkabeldurchmesser voneinander beabstandeten Spannkabelträger befestigt sind, und dass die Abstände der einzelnen Spannkabel untereinander grösser gewählt sind als die Abstände der einzelnen Monolitzen der Spannkabel.

2. Anordnung in einem Druckstollen nach Anspruch 1, dadurch gekennzeichnet, dass die Mittel zum Bilden des Abstandes zwischen den einzelnen Monolitzen (21) eines jeden der Spannkabel (3, 4, 18) in im wesentlichen regelmässigen Distanzen zwischen den genannten Monolitzen angeordnete Abstandhalter (22, 22', 22'', 22'''), vorzugsweise in der Form länglicher Körper sind.

3. Anordnung in einem Druckstollen nach Anspruch 2, dadurch gekennzeichnet, dass die Abstandhalter (22', 22'', 22''') eine oder mehrere Durchführungsöffnungen (31) aufweisen, wobei durch jede dieser Durchführungsöffnungen eine Monolitze (21) durchführbar ist.

4. Anordnung in einem Druckstollen nach einem der Ansprüche 1 bis 3, dadurch gekennzeichnet, dass die Spannkabelträger (9) in Richtung der Druckstollenlängsachse mindestens so weit voneinander distanziert sind, dass ein einzelnes der Spannkabel (3, 4, 18) zwischen zwei benachbarten Spannkabelträgern (9) durchführbar ist.

5. Anordnung in einem Druckstollen nach einem der Ansprüche 1 bis 4, dadurch gekennzeichnet, dass jeder der Spannkabelträger (9) einen im wesentlichen zur Längsachse des Druckstollens gerichteten Steg (15) umfasst und dass am Steg mindestens eine im wesentlichen rechtwinklig dazu und etwa parallel zur Druckstollenlängsachse sich erstreckende Sprosse (16, 16') befestigt ist.

6. Anordnung in einem Druckstollen nach Anspruch 5, dadurch gekennzeichnet, dass jedes der Spannkabel (3, 4, 18) an jedem der Spannkabelträger (9), an dem es befestigt ist, mindestens am Steg (15) und an einer der Sprossen (16, 16') anliegt.

7. Anordnung in einem Druckstollen nach Anspruch 5, dadurch gekennzeichnet, dass sich der Steg (15) mindestens eines Teiles der Spannkabelträger (9) im wesentlichen über die Dicke der vorgesehenen Betonauskleidung (30) erstreckt, dass die Sprossen (16, 16') im Bereiche des der Längsachse des Druckstollens abgewandten Endes des Steges angeordnet sind und dass das andere Ende als Befestigungsorgan (17) für Bewehrungselemente (12) vorgesehen ist.

## Claims

1. Arrangement of prestressing tendons (3, 4, 18) in a pressure tunnel to be provided with a prestressed concrete lining, with prestressing tendons placed adjacent to each other and around the circumference of the pressure tunnel (1), characterized in that each of the prestressing tendons comprises a bundle of monostrands, which bundle is held together at approximately regular intervals and is attached by fixing devices (9) disposed along the length of the prestressing tendon, the devices being anchored in the wall of the cut out or quarried out pressure tunnel, in that along each of the prestressing tendons, having at least five monostrands, means (22, 22', 22'', 22''') are provided to keep each of the monostrands at a distance from the adjacent monostrands of a corresponding bundle, in that the fixing devices are prestressing tendon supports directed essentially to the longitudinal axis of the pressure tunnel, which are disposed along the circumference and along the longitudinal axis of the pressure tunnel, several of the prestressing tendons, lying next to each other in pairs in the direction of the longitudinal axis of the pressure tunnel or if necessary one upon the other in the radial direction of the pressure tunnel, are fixed to each of the pressure tendon supports spaced apart from one another by at least the diameter of a prestressing tendon, and in that the spacing between the individual prestressing tendons is greater than the spacing between the individual monostrands of a prestressing tendon.

2. Arrangement in a pressure tunnel according to claim 1, characterized in that the means to form the spacing between the individual monostrands (21) of each of the prestressing tendons (3, 4, 18) are spacers (22, 22', 22'', 22'''), preferably in the form of elongated bodies, disposed at essentially regular intervals between the said monostrands.

3. Arrangement in a pressure tunnel according to claim 2, characterized in that the spacers (22', 22'', 22''') have one or more pass-through openings (31), a monostrand (21) being able to be passed through each of these pass-through openings.

4. Arrangement in a pressure tunnel according to one of the claims 1 to 3, characterized in that the prestressing tendon supports (9) are at least sufficiently spaced from each other in the direction of the longitudinal axis of the pressure tunnel to allow one single prestressing tendon (3, 4, 18) to be passsed through between two adjacent prestressing tendon supports (9).

5. Arrangement in a pressure tunnel according to one of the claims 1 to 4, characterized in that each of the prestressing tendon supports (9) comprises a bar (15) directed essentially towards the longtitudinal axis of the pressure tunnel and in that at least one stave (16, 16') running essentially at right angles thereto and approximately parallel to the longitudinal axis of the pressure tunnel is attached to the bar (15).

6. Arrangement in a pressure tunnel according to claim 5, characterized in that each of the prestressing tendons (3, 4, 18) at each of the prestressing tendon supports (9) to which it is attached, rests at least against the bar (15), and against one of the staves (16, 16').

7. Arrangement in a pressure tunnel according to claim 5, characterized in that the bar (15) at least on one part of the prestressing tendon supports (9) extends essentially beyond the thickness of the intended concrete lining (30), and in that the staves (16, 16') are disposed in the region of the end of the bar (15) turned away from the longitudinal axis of the pressure tunnel and in that the other end is intended as a fixing element (17) for reinforcement elements (12).

## Revendications

1. Dispositif de câbles de tension (3, 4, 18) dans une galerie en pression à pourvoir d'un habillage de béton précontraint avec des câbles de tension posés côte à côte le long de la périphérie de la galerie en pression (1) caractérisée en ce que chacun des câbles de tension comprend un faisceau de mono-torons lequel faisceau est fixé à des dispositifs de fixation (9) ancrés dans la paroi de la galerie en pression fraisée ou percée, disposés le long du câble de tension et maintenus à intervalles approximativement réguliers, en ce qu'il existe, le long d'un de chacun des au maximum cinq mono-torons entourant le câble de tension, les moyens (22, 22', 22'', 22''') pour retenir chacun des mono-torons du faisceau correspondant à son toron contigu, en ce que les dispositifs de fixation sont des supports de câble de tension (9) pour l'essentiel orientés par rapport à l'axe longitudinal de la galerie en pression lesquels sont disposés le long de la périphérie et le long de l'axe longitudinal de la galerie en pression, plusieurs des câbles de tension étant fixés de façon contiguë par paires dans la direction de l'axe longitudinal de la galerie en pression et, le cas échéant, de façon superposée dans la direction radiale de celle-ci à chacun des supports de câbles de tension écartés l'un de l'autre d'au minimum un diamètre de câble de tension et en ce que les écartements des différents câbles de tension sont choisis entre eux supérieurs aux écartements des différents mono-torons des câbles de tension.

2. Arrangement dans une galerie en pression selon la revendication 1 caractérisé en ce que les moyens de constituer l'écartement entre les différents mono-torons (21) de chacun des câbles de tension (3, 4, 18) sont des écarteurs (22, 22', 22'', 22''') de préférence sous la forme d'un corps longitudinal disposé pour l'essentiel à des distances régulières entre les mono-torons mentionnés.

3. Arrangement dans une galerie en pression selon la revendication 2 caractérisé en ce que les écarteurs (22, 22', 22'', 22''') présentent un ou plusieurs orifices de passage (31), un toron (21) pouvant être introduit à travers chacun de ces orifices de passage.

4. Arrangement dans une galerie en pression selon l'une des revendications 1 à 3 caractérisé en ce que les supports de câbles de tension (9) sont écartés dans la direction de l'axe longitudinal de la galerie en pression au minimum suffisamment largement entre eux pour qu'un des câbles de tension (3, 4, 18) puisse passer entre deux supports de câbles de tension contigus (9).

5. Arrangement dans une galerie en pression selon l'une des revendications 1 à 4 caractérisé en ce que chacun des supports de câbles de tension (9) comprend une traverse (15) orientée essentiellement selon l'axe longitudinal de la galerie en pression et en ce que au minimum soit fixé sur la traverse un barreau (16, 16') s'étendant pour l'essentiel perpendiculairement à celle-ci et approximativement parallèlement à l'axe longitudinal de la galerie en pression.

6. Arrangement dans une galerie en pression selon la revendication 5 caractérisé en ce que chacun des câbles de tension (3, 4, 18) appuie sur chacun des supports de câbles de tension (9) auquel il est fixé au minimum sur la traverse (15) et sur un des barreaux (16, 16').

7. Arrangement dans une galerie en pression selon la revendication 5 caractérisé en ce que au minimum une partie des supports de câbles de tension (9) s'étend pour l'essentiel sur l'épaisseur de l'habillage en béton prévu (30), en ce que les barreaux (16, 16') sont disposés dans le domaine de l'extrémité de la traverse regardant l'axe longitudinal de la galerie en pression et en ce que l'autre extrémité est prévue comme organe de fixation (17) pour les éléments d'armature (12).
